# EUROPÄISCHE PATENTSCHRIFT

(11) **EP 0 430 862 B1**
(45) Veröffentlichungstag und Bekanntmachung des Hinweises auf die Patenterteilung: **25.01.1995**
(21) Anmeldenummer: 90730015.6
(22) Anmeldetag: 05.11.1990
(51) Int. Cl.: H02B 11/127

(54) **Elektrische Schaltanlage mit einem ein- und ausfahrbaren Geräteträger**
Electrical switchgear with a withdrawable apparatus-support
Installation de commutation électrique avec un support d'appareil débrochable

(30) Priorität: 24.11.1989 DE 3939355
(43) Veröffentlichungstag der Anmeldung: 05.06.1991
(73) Patentinhaber: SIEMENS AKTIENGESELLSCHAFT, 80333 München (DE)
(72) Erfinder: Braun, Bodo, W-6050 Offenbach (DE); Bruszies, Christian, W-7302 Ostfildern 2 (DE); Feuerbach, Manfred, W-6000 Frankfurt 60 (DE); Genzel, Rolf-Günter, W-6129 Lützelbach (DE); Lobnig, Josef, W-8522 Herzogenaurach (DE); Raddatz, Jürgen, W-6000 Frankfurt 60 (DE)

(56) Entgegenhaltungen:
- DE-U- 1 943 468
- FR-A- 2 582 160
- US-A- 3 573 561

## Beschreibung

Die Erfindung betrifft eine elektrische Schaltanlage mit einem ein- und ausfahrbaren Geräteträger und mit einer einspeisungsseitigen Trennkontaktvorrichtung zur lösbaren Verbindung der Hauptstrombahnen der auf dem Geräteträger befindlichen Schaltgeräte mit ortsfest in der Schaltanlage angeordneten, der Einspeisung dienenden Leitern sowie mit einer weiteren, abgangsseitigen Trennkontaktvorrichtung zur Verbindung der Schaltgeräte mit zugehörigen ortsfesten Gegenkontakten, wobei die einspeisungsseitige Trennkontaktvorrichtung einen an dem Geräteträger bewegbaren gelagerten und durch ein an dem Geräteträger angebrachte Betätigungsvorrichtung quer zur Bewegungsrichtung des Geräteträgers beim Ein- und Ausfahren bewegbaren Trennkontaktblock aufweist, der mit den ortsfest angebrachten Leitern in und außer Eingriff bringbar ist, wobei der Trennkontaktblock und die ortsfesten Leiter derart ausgestaltet sind, daß sie, wenn sie in Eingriff sind, neben der elektrischen Verbindung auch eine mechanische Verriegelung gegen eine Verschiebung des Geräteträgers aus seiner Betriebsstellung bewirken.

Eine Schaltanlage dieser Art ist durch das DE-U-1 943 468 bekannt geworden. Die einspeisungsseitige Trennkontaktvorrichtung ist dabei als Drehtrennschalter ausgebildet, wobei der bewegbare Trennkontaktblock aus drei gemeinsam schwenkbaren Trennmessern besteht. Als weitere Möglichkeit ist die Verwendung einer verriegelbaren Steckeinrichtung, also einer linear wirkenden Trennkontakteinrichtung, angegeben. Als einspeisende Leiter dienen Sammelschienen, die seitlich des Geräteträgers in Einschubrichtung hintereinanderliegend ortsfest angeordnet sind.

Der seitliche Eingriff des eingangsseitigen Trennkontaktblockes in die ortsfesten Leiter (Sammelschienen) bewirkt ohne besondere Maßnahmen die Sperrung des Geräteeinschubes gegen eine Verschiebung des Geräteträgers an den zugehörigen Führungsteilen der Schaltanlage im spannungführenden Zustand. Dennoch kann in der Praxis von zusätzlichen mechanischen Sperren nicht abgesehen werden, weil infolge des einseitigen Eingriffes des eingangsseitigen Trennkontaktblockes in die ortsfesten Leiter die Gefahr besteht, daß bei unachtsamer Bedienung eine Verkantung des Geräteträgers in seiner Führung und eine Beschädigung an den zusammenwirkenden Teilen auftreten.

Durch die FR-A-2 582 160 ist ferner ein Hochspannungs-Trennschalter bekannt geworden, der nach Art eines Einschubes in eine Schaltanlage einfahrbar ist. Eine Betätigungswelle der bewegbaren Kontakte erstreckt sich dabei in der Einschubrichtung des Schaltgerätes, wobei die bewegbaren Kontakte als symmetrische Schwenkarme ausgebildet sind. In der Einschaltstellung ragen die bewegbaren Kontakte quer aus dem Schaltgerät heraus, so daß dieses aus der Schaltanlage nicht entfernt werden kann. Der vorliegend betrachtete Geräteträger ist demgegenüber kein einzelnes Schaltgerät, sondern eine Anordnung zur Aufnahme der vielfältigen Geräteausrüstung, wie sie zur Steuerung und zum Schutz von Verbrauchern, beispielsweise motorischer Antriebe, benötigt wird. Die Trennkontaktvorrichtungen sind demgemäß gesonderte Einheiten für Energieeinspeisung in die genannte Gerätekombination und zur Weiterleitung der Energie zu den Verbrauchern. Lediglich hinsichtlich der Trennerfunktion ähneln somit die Trennkontaktvorrichtungen eines Geräteträgers der vorliegenden Art einem Trenner nach der genannten FR-A-2 582 160.

Der Erfindung liegt ausgehend von einer Schaltanlage der eingangs genannten Art die Aufgabe zugrunde, unabhängig von den Proportionen des Geräteträgers unter Vermeidung zusätzlicher mechanischer Verriegelungsteile eine zuverlässige Sperrung des Geräteträgers im eingefahrenen, d. h. mit den einspeisenden Sammelschienen verbundenen Zustand zu erreichen.

Diese Aufgabe wird gemäß der Erfindung dadurch gelöst, daß abgangsseitige Trennkontaktvorrichtung gleichfalls einen an dem Geräteträger bewegbar gelagerten und durch die gemeinsame Betätigungsvorrichtung quer zur Bewegungsrichtung des Geräteträgers beim Ein- und Ausfahren bewegbaren Trennkontaktblock aufweist, der in und außer Eingriff mit den ortsfesten Gegenkontakten bringbar ist und daß auch der Trennkontaktblock und die ortsfesten Gegenkontakte derart ausgestaltet sind, daß sie, wenn sie in Eingriff sind, neben der elektrischen Verbindung auch eine zweite mechanische Verrieglung gegen eine Verschiebung des Geräteträgers aus seiner Betriebsstellung bewirken.

Dadurch, daß auch die abgangsseitige Trennkontaktvorrichtung bei ruhendem Geräteträger quer zur Einschubrichtung des Geräteträgers betätigbar ist, wird der Geräteträger an einer weiteren Stelle mit ortsfesten Teilen verbunden. Eine Verkantung des Geräteträgers und hierdurch bewirkte Schäden sind hierdurch praktisch auszuschließen. Günstig ist hierbei das gleichzeitige Wirksamwerden der elektrischen und mechanischen Verbindung durch die gemeinsame Betätigungsvorrichtung und die vollständige elektrische Trennung der auf dem Geräteträger befindlichen Schaltgeräte von ortsfesten Leitern ohne Verschiebung des Geräteträgers.

Vorteilhaft für die sichere Beibehaltung der Verriegelung des Geräteträgers in seiner Führung wirkt es sich aus bei einer Ausgestaltung der Erfindung, wenn die der Einspeisung dienenden Leiter und die abgangsseitigen Gegenkontakte der Trennkontaktvorrichtungen auf gegenüberliegenden Seiten des Geräteträgers angeordnet sind. Auch breite Geräteträger können auf diese Weise zuverlässig in ihrer Betriebsstellung festgehalten werden.

Bei einer weiteren Ausgestaltung der Erfindung können andererseits die einspeisungsseitige Trennkontaktvorrichtung und die abgangsseitigen Trennkontaktvorrichtungen an der Oberseite des Geräteträgers angeordnet sein. Diese Anordnung eignet sich insbesondere für Geräteträger mit einer gegenüber der Breite verhältnismäßig geringen Höhe.

Wie bereits erwähnt, ist die Betätigungsvorrichtung sowohl für die einspeisungsseitige Trennkontaktvorrichtung als auch die abgangsseitige Trennkontaktvorrichtung wirksam. In diesem Zusammenhang ist es vorteilhaft bei einer weiteren Ausgestaltung der Erfindung, daß die gemeinsame Betätigungsvorrichtung eine an der Frontseite des Geräteträgers zugängliche Welle, ein mit der Welle verbundenes Ritzel sowie wenigstens eine mit den bewegbaren Trennkontaktblöcken verbundene Zahnstange umfaßt. Diese Anordnung eignet sich sowohl für Geräteträger, an denen die Trennkontaktvorrichtungen auf gegenüberliegenden Seiten oder gemeinsam an der Oberseite des Geräteträgers angebracht sind. In dem einen Fall befinden sich dann die Zahnstangen auf gegenüberliegenden Seiten des Ritzels, während sie in dem an zweiter Stelle genannten Fall an derselben Seite des Ritzels in dieses eingreifen.

Die Erfindung wird im folgenden anhand der in den Figuren dargestellten Ausführungsbeispiele näher erläutert.

Die Figur 1 zeigt schematisch einen Geräteträger mit zwei auf gegenüberliegenden Seiten angeordneten Trennkontaktvorrichtungen und einer gemeinsamen Betätigungsvorrichtung der bewegbaren Teile.

In der Figur 2 ist gleichfalls in schematischer perspektivischer Darstellung ein Geräteträger mit zwei an der Oberseite des Geräteträgers angeordneten Trennkontaktvorrichtungen gezeigt.

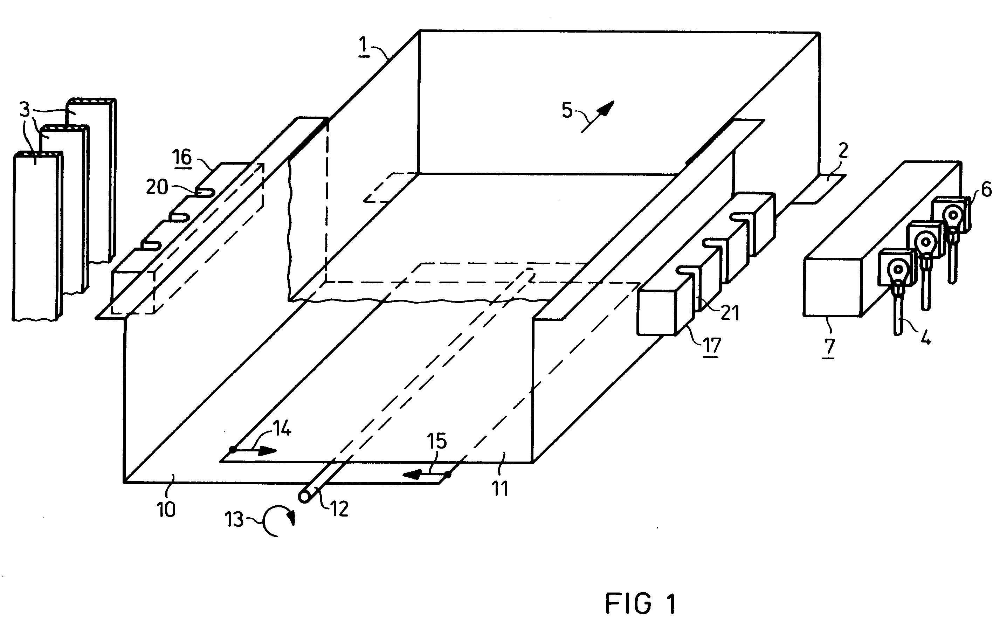

Der in der Figur 1 gezeigte Geräteträger 1 besitzt seitliche Führungsstege 2 zum Einführen in entsprechende ortsfeste Gegenstücke in einem Schaltschrank oder einer Schaltanlage. Die auf dem Geräteträger 1 unterzubringenden Schaltgeräte, Steuer- und Meßgeräte sind nicht dargestellt, da sie zum Verständnis der Erfindung nicht erforderlich sind und derartige Geräteanordnungen, beispielsweise für Motorschaltschränke, allgemein bekannt sind. Die erwähnten Schaltgeräte liegen im Leitungszug zwischen einspeisenden Sammelschienen 3 und abgangsseitigen Leitungen oder Kabeln 4, die der linken bzw. rechten Seite des Geräteträgers zugeordnet sind. Die Sammelschienen 3 sind in der durch einen Pfeil 5 gekennzeichneten Bewegungsrichtung des Gerätgeträgers 1 beim Einfahren in die Schaltanlage hintereinanderliegend angeordnet. Ebenso sind die abgangsseitigen Kabel 4 auf der rechten Seite des Geräteträgers 1 ortsfest hintereinanderliegend angeordnet. Bei der Darstellung in der Figur 1 wird davon ausgegangen, daß die drei Sammelschienen 3 an isolierenden Haltern ortsfest angestützt sind. Ebenso sind mit den Kabeln 4 in Verbindung stehende Gegenkontakten 6 in einem ortsfesten Trennkontaktblock 7 mit Isolierstoffgehäuse befestigt.

Auf dem Geräteträger 1 befindet sich eine aus zwei gegenläufig verschiebbaren Schlitten 10 und 11 bestehende Anordnung, die durch eine gemeinsame Betätigungsvorrichtung bedienbar ist. Als Bestandteil der Betätigungsvorichtung ist eine an der Frontseite des Geräteträgers 1 zugängliche Welle 12 vorgesehen. Die Welle 12 kann mit einem Ritzel versehen sein, das mit jeweils einer Zahnstange zusammenwirkt, die an dem Schlitten 10 und an dem Schlitten 11 derart angebracht ist, daß die eine der Zahnstangen in die eine Seite des Ritzels und die andere Zahnstange auf der gegenüberliegenden Seite des Ritzels eingreift. Eine Drehung der Welle 12 im Sinne des Pfeiles 13 bewirkt daher eine gegenläufige Bewegung der Schlitten 10 und 11 in Richtung der Pfeile 14 und 15. In Abhängigkeit von der Größe der Teile können auf der Welle 12 auch zwei oder mehr Ritzel und eine entsprechende Anzahl von Zahnstangen vorgesehen sein.

Die Bewegung der Schlitten 10 und 11 relativ zu dem Geräteträger 1 dient der Betätigung je einer Trennkontaktvorrichtung für die Einspeisung und für Abgänge. Für die Einspeisungsseite besteht die Trennkontaktvorrichtung aus den Sammelschienen 3 als feststehender Teil und einem Trennkontaktblock 16 als beweglicher Teil. Für die Abgangsseite sind ein feststehender Trennkontaktblock 7 mit den Gegenkontakten 6 und ein bewegbarer Trennkontaktblock 17 vorgesehen. Da miteinander in Eingriff zu bringende Kontaktteile in zahlreichen Ausführungen bekannt sind, wird von einer Darstellung von Einzelheiten in der Figur 1 abgesehen. Es ist jedoch erkennbar, daß die Kontaktblöcke 16 und 17 zur Aufnahme der ortsfesten Leiter bzw. Gegenkontaktstücke mit Ausnehmungen oder Vertiefungen 20 bzw. 21 versehen sind. Neben der elektrischen Verbindung kommt dadurch auch eine mechanische Verriegelung des Geräteträgers 1 an den ortsfesten Gegenkontakten zustande. Der Geräteträger 1 wird dadurch gegen eine Verschiebung aus seiner Betriebsstellung zuverlässig gesperrt.

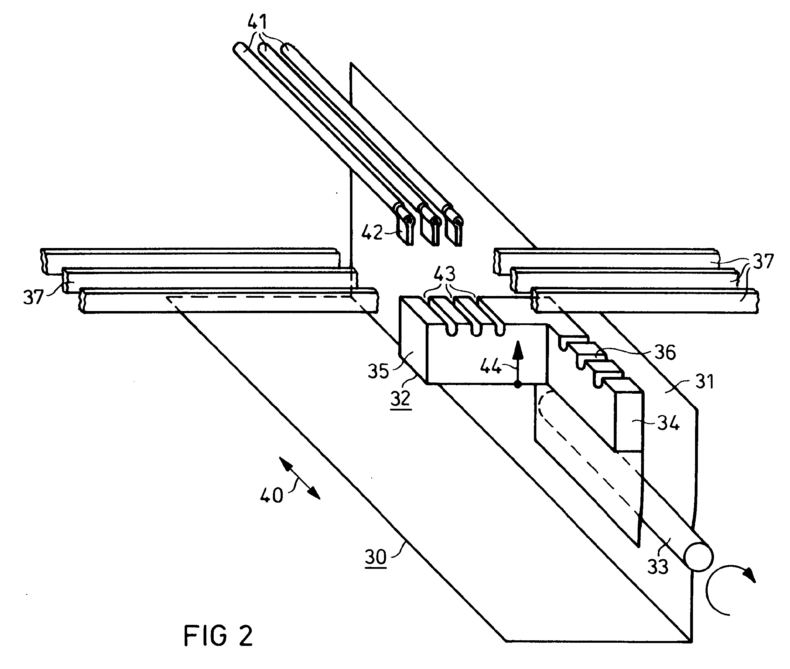

Ein weiteres Beispiel für eine Verriegelung eines Geräteträgers in seiner Betriebsstellung zeigt die Figur 2. In dieser Figur ist der Geräteträger schematisch als Winkelblech 30 dargestellt. An seiner rechten Seitenwand 31 ist vertikal verschiebbar ein winkelförmiger Kontaktträger 32 schlittenartig geführt. Die Verschiebung in vertikaler Richtung kann in der bereits beschriebenen Weise durch eine Betätigungsvorrichtung erfolgen, die eine Zahnstange in Verbindung mit einem Ritzel und eine Welle 33 umfaßt. Der winkelförmige Kontaktträger 32 weist einen sich parallel zu der Seitenwand 31 des Geräteträgers 30 erstreckenden Abschnitt als einspeisungsseitigen Trennkontaktblock 34 sowie einen rechtwinklig hiervon abragenden weiteren Abschnitt auf, der einen abgangsseitigen Trennkontaktblock 35 bildet. Der Trennkontaktblock 34 besitzt Einschnitte 36 zum Übergreifen von Sammelschienen 37 , die als ortsfeste Leiter quer zu der mit einem Pfeil 40 gekennzeichneten Einschubrichtung des Geräteträgers 30 oberhalb desselben verlaufend angeordnet sind. Etwa in derselben Ebene wie die Sammelschienen 37, jedoch rechtwinklig hierzu erstrecken sich zu Verbrauchern führende Stromschienen 41, an deren vorderen Enden abgewinkelte Gegenkontaktstücke 42 angebracht sind. Diese greifen in Vertiefungen 43 an dem Trennkontaktblock 35 ein.

Wird der Kontaktträger 32 in Richtung des Pfeiles 44 durch eine Drehung der Welle 33 verschoben, so gelangen gleichzeitig die Trennkontaktblöcke 34 und 35 des Kontaktträgers 32 in Eingriff mit den Sammelschienen 37 und den Gegenkontakten 42. Auch in diesem Beispiel ist der Geräteträger 30 gegen ein Herausziehen aus seiner Betriebsstellung dadurch gesichert, daß sowohl die Sammelschienen 37 als auch die Kontaktstücke 42 der abgehenden Leiter 41 eine mechanische Sperre bilden.

## Patentansprüche

1. Elektrische Schaltanlage mit einem ein- und ausfahrbaren Geräteträger (1; 30) und mit einer einspeisungsseitigen Trennkontaktvorrichtung (3, 16; 34, 37) zur lösbaren Verbindung der Hauptstrombahnen der auf dem Geräteträger (1; 30) befindlichen Schaltgeräte mit ortsfest in der Schaltanlage angeordneten, der Einspeisung dienenden Leitern (3, 37) sowie mit einer weiteren, abgangsseitigen Trennkontaktvorrichtung (7, 17; 35, 42) zur Verbindung der Schaltgeräte mit zugehörigen ortsfesten Gegenkontakten (7, 42), wobei die einspeisungsseitige Trennkontaktvorrichtung (3, 16; 34, 37) einen an dem Geräteträger (1; 30) bewegbaren gelagerten und durch ein an dem Geräteträger (1; 30) angebrachte Betätigungsvorrichtung (12; 33) quer zur Bewegungsrichtung des Geräteträgers (1; 30) beim Ein- und Ausfahren bewegbaren Trennkontaktblock (16, 34) aufweist, der mit den ortsfest angebrachten Leitern (3; 37) in und außer Eingriff bringbar ist, wobei der Trennkontaktblock (16, 34) und die ortsfesten Leiter (3, 37) derart ausgestaltet sind, daß sie, wenn sie in Eingriff sind, neben der elektrischen Verbindung auch eine mechanische Verriegelung gegen eine Verschiebung des Geräteträgers aus seiner Betriebsstellung bewirken,
**dadurch gekennzeichnet**, daß die abgangsseitige Trennkontaktvorrichtung (7, 17; 35, 42) gleichfalls einen an dem Geräteträger (1; 30) bewegbar gelagerten und durch die gemeinsame Betätigungavorrichtung (12; 33) quer zur Bewegungsrichtung des Geräteträgers (1; 30) beim Ein- und Ausfahren bewegbaren Trennkontaktblock (17; 42) aufweist, der in und außer Eingriff mit den ortsfesten Gegenkontakten (7; 42) bringbar ist und daß auch der Trennkontaktblock (17; 42) und die ortsfesten Gegenkontakte derart ausgestaltet sind, daß sie, wenn sie in Eingriff sind, neben der elektrischen Verbindung auch eine zweite mechanische Verriegelung gegen eine Verschiebung des Geräteträgers aus seiner Betriebsstellung bewirken.

2. Schaltanlage nach Anspruch 1,
**dadurch gekennzeichnet**, daß die der Einspeisung dienenden Leiter (3) und die abgangsseitigen Gegenkontakte (7) der Trennkontaktvorrichtungen (3, 16; 7, 17) auf gegenüberliegenden Seiten des Geräteträgers (1) angeordnet sind (Figur 1).

3. Schaltanlage nach Anspruch 1 oder 2,
**dadurch gekennzeichnet**, daß die einspeisungsseitige Trennkontaktvorrichtung (34, 37) und die abgangsseitige Trennkontaktvorrichtung (35, 42) an der Oberseite des Geräteträgers (30) angeordnet sind (Figur 2).

4. Schaltanlage nach Anspruch 1 oder 2,
**dadurch gekennzeichnet**, daß die für die Trennkontaktvorrichtungen (3, 16; 7, 17; 34, 37; 35, 42) gemeinsame Betätigungsvorrichtung (12; 33) eine an der Frontseite des Geräteträgers (1; 30) zugängliche Welle (12; 33), ein mit der Welle (12; 33) verbundenes Ritzel sowie wenigstens eine mit den bewegbaren Trennkontaktblöcken (16, 17; 34, 35) verbundene Zahnstange umfaßt.

## Claims

1. An electrical switchgear unit with a withdrawable chassis (1; 30) and with a disconnecting device (3, 16; 34, 37) at the supply side for the detachable connection of the main circuits of the switching units located on the chassis (1; 30) to conductors (3, 37) used for the infeed permanently installed in the switchgear, and with a further disconnecting device (7, 17; 35, 42) at the output side for connecting switching units to associated, permanent mating contacts (7, 42), whereby the supply-side disconnecting device (3, 16; 34, 37) has a moveable isolating contact block (16, 34) supported on the chassis (1; 30) and which is able to be moved laterally to the direction of movement of the chassis (1; 30) by an actuating device (12; 33) mounted on the chassis (1; 30) when the latter is moved in and out, said isolating contact block (16, 34) being able to be engaged with and disengaged from the permanently attached conductors (3; 37), whereby the isolating contact block (16, 34) and the permanent conductors (3, 37) are designed so that, when they are engaged, in addition to the electrical connection, they also produce a mechanical locking action against displacement of the chassis from its operating position,
characterised in that the output-side disconnecting device (7, 17; 35, 42) likewise has a moveable isolating contact block (17; 42) supported on the chassis (1; 30) and which is able to be moved by the common actuating device (12; 33) laterally to the direction of movement of the chassis (1; 30) when the latter is moved in and out, said contact block (17; 35) being able to be engaged with and disengaged from the permanently attached mating contacts (7; 42), and that the isolating contact block (17; 35) and the fixed mating contacts are designed in such a way that, when they are engaged, in addition to the electrical connection, they also produce a second mechanical locking action against displacement of the chassis from its operating position.

2. A switchgear unit according to Claim 1, characterised in that the conductors (3) used for the supply and the output-side mating contacts (7) of the disconnecting devices are arranged on opposite sides of the chassis (Figure 1).

3. A switchgear unit according to Claim 1 or 2, characterised in that the supply-side disconnecting device (34, 37) and the output-side disconnecting device (35, 42) are arranged on the top side of the chassis (30) (Figure 2).

4. A switchgear unit according Claim 1 or 2, characterised in that the common actuating device (12; 33) for the disconnecting devices (3, 16; 7, 17; 34, 37; 35, 42) has a shaft (12; 33) accessible at the front of the chassis (1; 30), a pinion connected to the shaft (12; 33) as well as at least one rack connected to the moveable isolating contact blocks (16, 17; 34, 35).

## Revendications

1. Installation de coupure électrique comportant un support d'appareils embrochable et débrochable (1; 30) et un dispositif à contacts de sectionnement (3, 16; 34, 37), situé du côté de l'alimentation et servant à relier d'une façon amovible les voies de courant principales des appareils de coupure situés sur le support d'appareils (1; 30) à des conducteurs (3, 37) montés fixes dans l'installation de coupure et utilisés pour l'alimentation, ainsi qu'à un autre dispositif de contact de sectionnement (16, 17; 35, 42), situé côté départ et servant à relier les appareils de coupure à des contacts antagonistes fixes associés (7, 42), le dispositif à contacts de sectionnement (3, 16; 34, 37), situé du côté alimentation, possédant un bloc à contacts de sectionnement (16, 34) qui est monté de manière à être déplaçable sur le support d'appareils (1; 30) et est déplaçable, lors de l'embrochage ou du débrochage, transversalement par rapport à la direction de déplacement du support d'appareils (1; 30), au moyen d'un dispositif d'actionnement (12; 33) installé sur le support d'appareils (1; 30), et qui peut être amené en prise avec les conducteurs montés fixes (3; 37) et en être dégagé, le bloc à contacts de sectionnement (16, 34) et les conducteurs fixes (3, 37) étant agencés de telle sorte que, lorsqu'ils sont en prise, ils réalisent, outre la liaison électrique, également un verrouillage mécanique vis-à-vis d'un déplacement du support d'appareils à partir de sa position de service,
caractérisée par le fait que le dispositif à contacts de sectionnement (7, 17; 35, 42) situé côté départ, possède un bloc à contacts de sectionnement (17; 42), qui est monté de manière à être déplaçable sur le support d'appareils (1; 30) et est déplaçable au moyen du dispositif commun d'actionnement (12; 33), transversalement par rapport à la direction de déplacement du support d'appareils (1; 30) lors de l'embrochage et du débrochage et qui peut être amené en prise avec les contacts antagonistes fixes (7; 42) et en être dégagés, et que également le bloc à contacts de séparation (17; 42) et les contacts antagonistes fixes sont agencés de telle sorte que, lorsqu'ils sont en prise, ils établissent, en dehors de la liaison électrique, également un second verrouillage mécanique à l'encontre d'un déplacement du support d'appareils à partir de sa position de service.

2. Installation de coupure suivant la revendication 1, caractérisée par le fait que les conducteurs (3) utilisés pour l'alimentation et les contacts antagonistes (7), situés côté départ, des dispositifs à contacts de sectionnement (3, 16; 7, 17) sont disposés sur des côtés opposés du support d'appareils (1). (Figure 1).

3. Installation de coupure suivant la revendication 1 ou 2, caractérisée par le fait que le dispositif de contacts de sectionnement (34, 37), situé du côté alimentation, et le dispositif de contacts de sectionnement (35, 42), situé côté départ, sont disposés sur le côté supérieur du support d'appareils (30). (Figure 2).

4. Installation de coupure suivant la revendication 1 ou 2, caractérisée par le fait que le dispositif d'actionnement (12; 33), qui est commun pour les dispositifs de contacts de sectionnement (3, 16; 7, 17; 34, 37; 35, 42), comprend un arbre (12; 33), qui est accessible à partir de la face frontale du support d'appareils (1; 30), un pignon relié à l'arbre (12; 33) ainsi qu'au moins une crémaillère reliée aux blocs mobiles à contacts de sectionnement (16, 17; 34, 37).
